**Europäisches Patentamt**

**European Patent Office**

**Office européen des brevets**

(19)

(11) Veröffentlichungsnummer : **0 133 465**
**B1**

(12) **EUROPÄISCHE PATENTSCHRIFT**

(45) Veröffentlichungstag der Patentschrift :
01.10.86

(21) Anmeldenummer : 84107318.2

(22) Anmeldetag : 26.06.84

(51) Int. Cl.⁴ : **H 04 N   5/21, H 04 N   9/29**

(54) Entstörschaltung für Farb-Fernsehgeräte.

(30) Priorität : 30.07.83 DE 3327655

(43) Veröffentlichungstag der Anmeldung :
27.02.85 Patentblatt 85/09

(45) Bekanntmachung des Hinweises auf die Patenterteilung : 01.10.86 Patentblatt 86/40

(84) Benannte Vertragsstaaten :
AT DE FR IT

(56) Entgegenhaltungen :
FUNK-TECHNIK, 37(1982), Heft 1, München, Heidelberg, BERND STÜDEMANN "Sperrwandlernetzteil
mit kommerziellen Eigenschaften", Seiten 21-25
FUNK-TECHNIK, 31. Jahrgang, Nr. 20/1976, München,
Heidelberg, ULRICH FLEISCHMANN "Netzfilter für
den HF- und VHF-Bereich", Seiten 661,662,664

(73) Patentinhaber : **Blaupunkt-Werke GmbH**
**Robert-Bosch-Strasse 200**
**D-3200 Hildesheim (DE)**

(72) Erfinder : **Martinetz, Heribert**
**Trockener Kamp 50**
**D-3200 Hildesheim (DE)**
Erfinder : **Specht, Hartmut**
**Goffaux-Strasse 8**
**D-3200 Hildesheim (DE)**

(74) Vertreter : **Eilers, Norbert, Dipl.-Phys.**
**Blaupunkt-Werke GmbH Robert-Bosch-Strasse 200**
**D-3200 Hildesheim (DE)**

**Beschreibung**

Die Erfindung betrifft eine Schaltung zur Beseitigung der von der Entmagnetisierungsspule auf Farbbildröhren in Fernsehgeräten durch unvermeidbare kapazitive und/oder induktive Kopplung bedingten Bildstörungen, bei der die Entmagnetisierungsspule an die Netzzuleitung des Schalt-Netzteils angeschlossen ist.

Solche Bildstörungen treten einerseits passiv durch Einströmen oder -strahlen von Hochfrequenz aus dem Netz über die vorgegebene Kapazität der Entmagnetisierungsspule zur Bildrohrmasse von rd. 100-200 pF und zur Anode und zu nahen Bauteilen und Leiterbahnen und durch induktive Kopplung der Entmagnetisierungsspule zum Ablenksystem der Farbbildröhre auf. Dabei entsteht ein die Störung in das Fernsehgerät übertragender Nebenschluß zum Netz. Aktive Störungen können aus dem Schalt-Netzteil und dem Hochspannungserzeuger des Farb-Fernsehgerätes direkt ins Netz oder über die Ablenkspule durch kapazitive und induktive Kopplung auf die Entmagnetisierungsspule gelangen und von dort großflächig abgestrahlt werden.

Zur Verringerung solcher Störungen ist es bekannt, in die Netzzuleitung zum Schaltnetzteil, an die auch die Entmagnetisierungsspule angeschlossen ist, aus einer Induktivität und einer Kapazität bestehende Entstörfilter vor oder hinter den Anschluß der Entmagnetisierungsspule zu legen. Ein LC-Filter vor dem Anschluß der Entmagnetisierungsspule kann zwar die passiven Störungen verringern, nicht aber die aktiven Störungen beseitigen und LC-Filter hinter dem Anschluß verringern die aktiven Störungen, lassen aber die passiven Störungen weiter in das Fernsehgerät eindringen.

Es besteht deshalb die Aufgabe, die bekannten Entstörschaltungen so zu verbessern, daß sowohl die passiven als auch die aktiven Störungen auf ein Minimum herabgesetzt und damit der Sicherheitsabstand zu den vorgeschriebenen Grenzwerten über aktives und passives Störverhalten verbessert wird.

Die Schaltung laut Erfindung löst diese Aufgabe dadurch, daß LC-Filter symmetrisch vor und hinter dem Anschluß der Entmagnetisierungsspule vorgesehen sind, wobei die Induktivitäten als untereinander gleiche Wicklungsteile auf einem gemeinsamen Spulenkörper und Ferritkern untergebracht und jeweils gegensinnig in Mittelanzapfungen verbunden sind und die Entmagnetisierungsspule an diese Mittelanzapfungen angeschlossen ist.

Diese Lösung bringt den Vorteil, daß hochfrequente Störungen aus dem Netz nur noch stark abgeschwächt zur Entmagnetisierungsspule vordringen können und die gegebenen Kapazitäten dieser Spule dann nicht mehr zur Übertragung in das Fernsehgerät ausreichen. Auch die vom Schalt-Netzteil und vom Hochspannungserzeuger hervorgerufenen Störungen gelangen nur erheblich geschwächt auf die Entmagnetisierungsspule und erreichen das Netz nicht mehr. Die Ablenkspule der Farbbildröhre ist von der Entmagnetisierungsspule und dem Netz entkoppelt und die Störungs-Abstrahlung durch die Entmagnetisierungsspule beseitigt. Die symmetrische Anordnung der Induktivitäten der beiden LC-Filter auf einem gemeinsamen Spulenkörper und Ferritkern mit gegensinniger Verbindung der Teilwicklungen zu Mittelanzapfungen für den Anschluß der Entmagnetisierungsspule beseitigt aus evtl. Unsymmetrien von Einzeldrosseln bestehende Störungen und unterdrückt Streufehler.

Die Wirkung dieses Filters läßt sich noch verbessern, wenn man jede Wicklung zur Verringerung der Wicklungs-Kapazität in bekannter Art auf Doppelkammern des gemeinsamen Spulenkörpers verteilt und die Verbindungen dieser Teilwicklungen die Mittelanzapfungen bilden. Damit wird auch das Herausführen der Wicklungsenden zur Bildung der Mittelanzapfungen besonders einfach.

Die Lösung laut Erfindung verringert durch die Zusammenfassung der Induktivitäten auch die Zahl der Bauelemente, vereinfacht die Verdrahtung und spart Platz im Gerät.

Untersuchungen haben gezeigt, daß die wirksame Entkopplung der Entmagnetisierungsspule vom Netz und Schalt-Netzteil das von der Farbröhren-Anode, der Ablenkspule und dem die Störung im Hochspannungserzeuger verursachenden Diode-Split-Trafo ausgestrahlte Störspektrum weiter unter die VDE-Grenzwerte senkt und die bisher übliche besondere Abschirmung des Diode-Split-Trafos wegfallen kann.

Die Entstörschaltung wird anhand der Zeichnung erläutert. In der Zeichnung zeigen in schematischer Darstellung :

Figur 1 den Anschluß der Entmagnetisierungspule und die dabei gegebenen Kopplungsmöglichkeiten und

Figur 2 ein Ausführungsbeispiel für die Entstörschaltung lt. Erfindung.

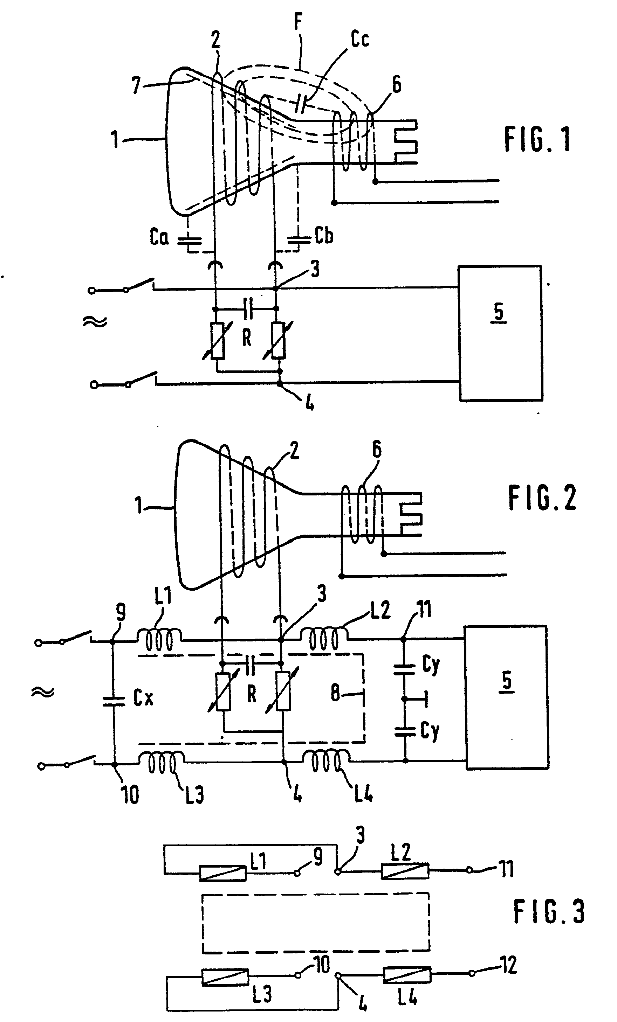

Laut Fig. 1 trägt die Farbbildröhre 1 eine Entmagnetisierungsspule 2, die über einen bekannten Regelkreis R aus veränderlichen Widerständen und Kapazität an den Punkten 3, 4 an die Netzspeisung des Schalt-Netzteils 5 im Fernsehgerät angeschlossen ist. Die Ablenkspule 6 ist mit dem DST (diodesplit)-Trafo des Hochspannungserzeugers im Fernsehgerät verbunden. Dabei sind folgende störende Kopplungen möglich : Einmal kapazitiv vom und in das Netz über die Kapazitäten Ca, Cb zwischen der Farbbildröhren-Anode 7 und der Netzzuleitung und über die Kapazität Cc zwischen der Entmagnetisierungsspule 2 und der Ablenkspule 6 und zum anderen induktiv über die einander überlagernden Felder F dieser beiden Spulen 2, 6.

Zur Beseitigung der Störungen wird bei der Schaltung lt. Fig. 2 die Entmagnetisierungsspule 2 auf der Farbbildröhre 1 wiederum über einen Regelkreis R an den Punkten 3, 4 an die Netzspeisung für den Schalt-Netzteil 5 angeschlossen.

Vor und hinter den Anschlußpunkten 3, 4 ist je I LC-Filter aus den untereinander gleichen Induktivitäten L1 und L3 bzw. L2 und L4 und den Kapazitäten Cx bzw. Cy vorgesehen. Dabei besteht die Kapazität des hinter den Anschlußpunkten 3, 4 gelegenen Filters mit den Induktivitäten L2 + L4 aus zwei in Reihe geschalteten, gleich großen Kapazitäten Cy, deren Sternpunkt zur besseren Symmetrierung an Masse liegt. Die Induktivitäten L1, L2, L3, L4 sind alle gleichsinnig auf einem gemeinsamen Spulenkörper mit Ferritkern 8 gewickelt. Der Spulenkörper (nicht dargestellt) har in bekannter Art für die Aufnahme der vier Wicklungen zwei Doppelkammern, von denen die erste die Wicklungen der Induktivitäten L1, L2 und die zweite die Wicklungen der Induktivitäten L3, L4 aufnimmt. Gemäß Fig. 3 sind die Wicklungen jeder Doppelkammer zur Unterdrückung der Streufelder gegensinnig zueinander geschaltet. In dieser Schaltung bilden die Anschlüsse 9, 10 den Eingang und die Anschlüsse 11, 12 den Ausgang des Gesamtfilters und die Induktivitäten L1 + L3 mit der Kapazität Cx das vor den Anschlußpunkten 3, 4 der Entmagnetisierungsspule 2 liegende LC-Filter und die Induktivitäten L2 + L4 mit den Kapazitäten Cy das dahinter liegende Filter.

Für die Entstörung haben sich bei einem Farbfernsehgerät mit 67 cm Bildschirm und dafür ausgelegter Entmagnetisierungsspule folgende Werte für die Bauelemente der LC-Filter bewährt :

L1 = L2 = L3 = L4 = 15 mH (Meßfrequenz 1 kHz)
Cy = 1,5 nF
Cx = 0,1-0,2 nF

Für andere Bildschirmgrößen ist eine entsprechende Anpassung dieser Werte erforderlich.

## Patentansprüche

1. Schaltung zur Beseitigung der von der Entmagnetisierungsspule (2) auf Farbbildröhren (1) in Fernsehgeräten durch unvermeidbare kapazitive und/oder induktive Kopplung (Ca, Cb, Cc, F) bedingten Bildstörungen, bei der die Entmagnetisierungsspule an die Netzzuleitung des Netz-Schaltteils (5) angeschlossen ist und in der Netzzuleitung ein LC-Filter liegt, dadurch gekennzeichnet, daß LC-Filter symmetrisch vor und hinter dem Anschluß (3, 4) der Entmagnetisierungsspule (2) vorgesehen sind, wobei die Induktivitäten als untereinander gleiche Wicklungsteile (L1, L2, L3, L4) auf einem gemeinsamen Spulenkörper und Ferritkern (8) untergebracht und jeweils gegensinnig in Mittelanzapfungen (3, 4) verbunden sind und die Entmagnetisierungsspule an diese Mittelanzapfungen angeschlossen ist.

2. Schaltung nach Anspruch 1, dadurch gekennzeichnet, daß jede Teilwicklung (L1, L2 und L3, L4) in bekannter Art in einer Doppelkammer des gemeinsamen Spulenkörpers untergebracht ist und die Verbindungen dieser Teilwicklungen die Mittelanzapfungen (3, 4) bilden.

## Claims

1. Circuit for eliminating the picture disturbances caused by the demagnetization coil (2) on colour picture tubes (1) in television sets due to unavoidable capacitive and/or inductive coupling (Ca, Cb, Cc, F), in which circuit the demagnetization coil is connected to the mains supply line of the mains switching section (5) and in the mains supply line an LC filter is located, characterized in that LC filters are symmetrically provided in front of and behind the connection (3, 4) of the demagnetization coil (2), in which arrangement the inductivities are accommodated as winding sections (L1, L2, L3, L4), which are identical with each other, on a common coil former and ferrite core (8) and are in each case connected with opposite polarity in centre taps (3, 4) and the demagnetization coil is connected to these centre taps.

2. Circuit according to Claim 1, characterized in that each part winding (L1, L2 and L3, L4) is accommodated in known manner in a double chamber of the common coil former and the connections of these part windings form the centre taps (3, 4).

## Revendications

1. Circuit pour supprimer les parasites d'image engendrés par la bobine de désaimantation (2) d'un tube cathodique couleur (1) d'un appareil de télévision résultant du couplage capacité et/ou inductif, inévitable (Ca, Cb, Cc, F), montage dans lequel la bobine de désaimantation est reliée à la ligne d'alimentation de la partie de commutation (5) du réseau et la ligne d'alimentation comporte un filtre LC, montage caractérisé par des filtres LC prévus de façon symétrique en avant et en arrière des points de branchement (3, 4) de la bobine de désaimantation (2), les inductances étant des parties d'enroulement (L1, L2, L3, L4) égales entre elles prévues sur un corps de bobine commun avec des noyaux de ferrite (8), ces inductances étant respectivement reliées, en sens opposé, aux prises médianes (3, 4) auxquelles est reliée la bobine de désaimantation.

2. Circuit selon la revendication 1, caractérisé en ce que chaque enroulement partiel (L1, L2 et L3, L4) est logé de façon connue dans une chambre double du corps de bobine commun et les liaisons de ces enroulements partiels forment les prises médianes (3, 4).

0 133 465

FIG.1

FIG.2

FIG.3